# EUROPEAN PATENT APPLICATION

(11) **EP 4 389 699 A1**
(43) Date of publication of application: **26.06.2024**
(21) Application number: 22215065.8
(22) Date of filing: 20.12.2022
(51) Int. Cl.: C01B 3/50, C01B 17/69, C01B 25/18, C10J 3/00, C01B 25/28, C01C 1/04

(54) **A SYSTEM AND A METHOD FOR POLYGENERATION**

(71) Applicant: Al-Bakri, Sami Abdulrahman, 23423 Jeddah (SA)
(72) Inventor: Al-Bakri, Sami Abdulrahman, 23423 Jeddah (SA)
(74) Representative: LifeTech IP Spies & Behrndt Patentanwälte PartG mbB

(57) **Abstract**

A system for polygeneration is disclosed that comprises: a gasifier (100) configured to receive an oil shale (10) and to generate producer gas (11) from the oil shale (10); a gas purification unit (200) fluidly connected to the gasifier (100), the gas purification unit (200) is configured to receive the producer gas (11) from the gasifier (100) and produce syngas (21) and hydrogen sulfide (22); and a sulfuric acid synthesis unit (300) fluidly connected to the gas purification unit (200), the sulfuric acid synthesis unit (300) is configured to receive hydrogen sulfide (22) from the gas purification unit (200) to produce hydrogen (30) and sulfuric acid (31).

## Description

The present invention relates to a system and a method for polygeneration and, in particular, to a system and a method for an oil shale-based polygeneration plant for producing raw materials from a carbon-based feedstock. For example, hydrogen, ammonia, diammonium phosphate, electricity and heat may be produced from shale material.

### BACKGROUND

There is a growing awareness that current energy systems - from primary energy sources to end-use energy services - are no longer sustainable, mostly due to concerns about global warming caused by greenhouse gas emissions, and dependence on depleting fossil fuel reserves. Considerable attention is being paid to shifting toward more sustainable energy systems to meet the growing energy demands of the future.

In general, renewable energy sources (e.g., wind, solar, hydro, and geothermal) are viewed as far more sustainable than fossil fuels. However, most definitions of sustainable energy systems also take into account social and environmental aspects, as energy systems can be responsible for air pollution, the release of toxins, and water scarcity. For instance, some renewable energy development projects, such as deforestation to produce biofuels, can cause severe environmental damage and are therefore less sustainable than wind or solar energy.

In addition, there is an ongoing discussion about the role of non-renewable energy sources (e.g., nuclear energy) in sustainable energy supply. Even though nuclear energy is a low-carbon energy source with historically comparable mortality rates to wind and solar energy, its sustainability is the subject of controversy due to concerns about nuclear proliferation, radioactive waste, and accidents. Switching from coal to natural gas has environmental benefits (e.g., reduced climate impact), but may delay the transition to more sustainable options (renewables). The carbon capture and storage or utilization solution can be integrated with thermal power plants or other sources of CO₂ but is expensive and has been little used to date.

A variety of technical pathways exist for moving to low-carbon and sustainable energy systems. They include the optimal use of fossil fuel resources, increasing the efficiency of thermal power plants, phasing out coal-fired power generation, increasing the generation of electricity from renewable energy sources, and promoting the concept of polygeneration.

Increasing the efficiency of thermal power plants is always desirable, as it not only implies better use of the resources but also indirectly reduces the environmental impact. However, it has been shown that steam-based thermal power plants saturate in efficiency, and any increase in efficiency depends on the material development of the heat exchangers. Although combined cycle power plants have shown a significant increase in efficiency and thus a reduced environmental impact, there are some constraints on the type of fuel used (generally natural gas) for these plants. While many countries are in the process of phasing out coal-fired power generation, they are pressing ahead with the expansion of renewable energies. In 2021, wind and solar energy supplied more than 8% of the world's electricity, and their share is expected to continue to rise while their costs continue to fall. However, if power grids are to accommodate a greater share of variable renewables, they will need the flexibility of supporting infrastructure such as large-scale energy storage systems, which are still in the early stages of development. For some energy-intensive technologies and processes that are difficult to electrify, hydrogen or ammonia produced from renewable or low-emission energy sources have an increasingly important role to play.

Polygeneration is a potentially sustainable energy solution that can use multiple fuels and provide multiple services at the same time. For example, a polygeneration system/method can produce four or more useful products using a same input or process. It can be considered as a generalization of Combined Heat and Power (CHP) systems, also known as cogeneration plants. In CHP plants, the overall energy efficiency can reach 80% to 90% (power and heat supply), while in pure electricity production it is 20% to 45%. The overall energy efficiency of CHP plants can be further improved if other useful energy products (trigenera-tion) can be obtained from the excess heat (e.g., cooling). Moreover, a polygeneration plant can produce electricity, heating, cooling, and raw materials for the chemical industry, which is a promising concept for achieving a circular carbon economy.

Oil shale is a fossil fuel source that can improve the economy, independence, and self-sufficiency of energy. Thermal conversion of oil shale can be accomplished by combustion, retorting, or gasification. Direct combustion of oil shale fuels is mainly used to generate electricity and heat, while the retorting process gives shale gas (gaseous fuel), spent shale (residual char) and the targeted product in many cases shale oil (liquid fuel). There are two known retorting processes that extract shale oil from shale deposits, namely the underground retorting processes (the so-called in-situ processes) and the aboveground retorting processes. In the in-situ retorting processes, the underground oil shale deposits are pyrolyzed by adding heat. These processes have the advantage of avoiding the mining, processing, transportation, and disposal of large quantities of waste material. However, in situ retorting processes suffer from the lack of permeability and low thermal conductivity of oil shale deposits, as well as the risk of groundwater contamination and the possible escape of toxic gases and hydrocarbons from heated deposits. Another challenge is the high energy demand, which is usually met by external energy sources such as electricity or natural gas. In the aboveground retorting processes, the oil shale is extracted and then heated in a retort. Pre-treatment of the oil shale including mining, crushing, and screening is critical to meet the requirements of the retort operation. The aboveground retort processes can be divided into gas or solid carrier oil shale retorting processes. The thermal energy source for heating the gas or solid carrier is provided by a combustion process of the shale gas, part of the produced shale oil or spent shale. Oil shale retorting processes with gas carriers require a relatively long processing time (several hours) compared to oil shale retorting processes with solid carriers (several minutes) due to the low thermal conductivity coefficient of oil shale. In addition, the oil shale retorting processes with solid carriers are featured by high shale oil yields and high calorific value of combustible gases due to the absence of combustion gas contamination. However, they are complex to design and expensive to maintain, so they may not be feasible.

Gasification is a partial high-temperature oxidation process for converting oil shale into gaseous fuels, also called producer gas or product gas.

In view of the mentioned drawbacks of conventional systems, there is still a demand for other polygeneration systems that are able to use oil shale to provide not only producer gas, but also other raw materials (e.g. hydrogen, ammonia, diammonium phosphate), electricity and heat.

### SUMMARY OF THE INVENTION

At least some of the above-mentioned problems are overcome by a polygeneration system according to claim 1 or a method for polygeneration according to claim 14. The dependent claims refer to further advantageous realizations of the subject matters defined in the independent claims.

The present invention relates to system for polygeneration comprising a gasifier, a gas purification unit, and a sulfuric acid synthesis unit. The gasifier is configured to receive an oil shale and to generate producer gas from the oil shale. The gas purification unit is fluidly connected to the gasifier, the gas purification unit is configured to receive the producer gas from the gasifier and produce syngas and hydrogen sulfide. The sulfuric acid synthesis unit is fluidly connected to the gas purification unit, the sulfuric acid synthesis unit is configured to receive hydrogen sulfide from the gas purification unit to produce hydrogen and sulfuric acid.

The term polygeneration could be understood as a production of heat, electricity, and gaseous and/or liquid energy sources from diverse energy-rich biogenic raw materials and residues such as oil shale materials, wherein embodiments shall not be limited on oil shale materials. The system may also be fed by other hydrocarbons that can be gasified into hydrogen.

It is further understood that here and in the following a unit that is configured to receive a (chemical) compound has an inlet connected to a corresponding supply for the respective compound (e.g. by a pipe or tube). In addition or alternatively, the respective compound may also be taken directly from the surrounding (e.g. from the air).

Optionally, the system further comprises a Haber-Bosch unit fluidly connected to the sulfuric acid synthesis unit, the Haber-Bosch unit is configured to receive hydrogen from the gas purification unit (or from another source such as the sulfuric acid synthesis unit) and nitrogen to produce ammonia. The source of nitrogen may be air.

Optionally, the system further comprises a phosphoric acid synthesis unit fluidly connected to the sulfuric acid synthesis unit, the phosphoric acid synthesis unit is configured to receive sulfuric acid from sulfuric acid synthesis unit and phosphate-containing rock to produce phosphoric acid.

Optionally, the system further comprises a diammonium phosphate synthesis unit fluidly connected to the phosphoric acid synthesis unit and the Haber-Bosch unit, the diammonium phosphate synthesis unit is configured to receive phosphoric acid from the phosphoric acid synthesis unit and ammonia from the Haber-Bosch unit to produce diammonium phosphate.

Optionally, the system further comprises a water-gas shift unit fluidly connected to the gas purification unit, the water-gas shift unit is configured to receive the syngas from the gas purification unit and to produce further hydrogen and carbon dioxide from the carbon monoxide in the presence of water.

Optionally, the syngas includes carbon monoxide. According to further embodiments, the water-gas shift unit can be configured to convert the carbon monoxide into the carbon dioxide in the presence of water vapor generated from received water (e.g. from a condensation system).

According to further embodiments, the water-gas shift unit may provide also the further hydrogen to the Haber-Busch unit.

Optionally, the syngas includes further hydrogen and the Haber-Bosch unit can be further fluidly connected to the water-gas shift unit to receive the further hydrogen.

Optionally, the system further comprises an air reactor configured to produce nitrogen or an air separation unit configured to produce nitrogen. The Haber-Bosch unit can be configured to receive the produced nitrogen from the air reactor or from the air separation unit.

Optionally, the system further comprises a waste heat recovery unit fluidly connected to the gasifier, the waste heat recovery unit can be configured to use heat generated by the gasifier to produce at least one of the following: electricity, steam, hot air, hot oil.

Optionally, the system further comprises a fluidized bed ash cooler fluidly connected to the gasifier or to the air reactor, wherein the fluidized bed ash cooler can be configured to receive shale ash from the air reactor or from the gasifier and to cool down the shale ash.

Optionally, the fluidized bed ash cooler can include at least one of the following:
- a bubbling fluidized bed,
- a circulating fluidized bed system,
- a moving bed fluidized bed cooler,
- a fluid bed cooler.

Optionally, the fluidized bed ash cooler can be fluidly connected to a heat exchanger. The heat exchanger may include a rotating-plate air preheater heat exchanger and/or a thermal oil heat exchanger.

Optionally, the system further comprises at least one of the following:
- a mill configured to crush or ground a raw oil shale;
- a dryer to be fed by the crushed or ground oil shale including a rotary feeder and/or screw conveyor;
- another mill for crushing or grounding a raw phosphate-containing rock;
- another dryer for the crushed or ground raw phosphate-containing rock and a rotary feeder and/or screw conveyor to feed the crushed or ground raw phosphate-containing rock;
- a condensation system fluidly connected to the water-gas shift unit, the condensation system being configured to condense humid air from the dryer and/or from the other dryer to water and to output waste gases;
- a combustion unit configured to generate heat by combustion of the waste gases output by the condensation system;
- a feeding unit for feeding the dried oil shale to the gasifier;
- another feeding unit to feed the dried phosphate-containing rock to the phosphoric acid synthesis unit.

Optionally, the sulfuric acid synthesis unit can be fluidly connected to the condensation system and can be configured to receive water from a condensation system.

Embodiments relate also to a method for polygeneration. The method comprises the following steps:
- providing an oil shale;
- generating producer gas from the oil shale;
- producing syngas and hydrogen sulfide from the producer gas; and
- producing hydrogen and sulfuric acid from the hydrogen sulfide.

Optionally, the method comprises one or more of the following steps:
- producing ammonia from hydrogen and nitrogen;
- producing phosphoric acid from sulfuric acid and from phosphate-containing rock;
- producing diammonium phosphate from phosphoric acid and ammonia.

It is understood that the all function described with the system for polygeneration can be realized as further optional method steps. Furthermore, although the method steps are mentioned in a given order, this order may be different - at least as long as the desired result is achievable.

Although embodiments are particularly suitable for the use with oil shale material, it is understood that the same concept is also usable for other fossil energy source such as coal which include usable hydrocarbon compounds (that can be gasified to yield hydrogen).

When compared to conventional systems as mentioned above, embodiments provide numerous advantages.

For example, using conventional systems for converting the oil shale into raw materials is mainly limited to producer gas. Embodiments of the present polygeneration system overcome this limit and allow for a multiple raw material production (e.g. syngas, hydrogen sulfide, hydrogen, nitrogen, sulfuric acid, phosphoric acid, diammonium phosphate), providing a higher conversion rate, and also generates electricity, steam, hot air, hot oil. In general, embodiments are applicable wherever an oil shale polygeneration system are of advantage.

Embodiments are usable for polygeneration plants that can produce electricity, heating, cooling, and raw materials for the chemical industry, which is a promising concept for achieving a circular carbon economy. The polygeneration plants may be fired from fossil fuels or renewable energy sources such as biomass and solar energy. Hybrid systems that use both renewable and non-renewable resources may also be a viable option. Compared to plants with only one energy product, polygeneration plants according to embodiments significantly improve overall efficiency, minimize total losses and emissions, and improve resource utilization.

In terms of both limited resource availability and environmental impact, fossil fuel use (e.g., coal or oil shale) is not sustainable in the long term. However, during the transition from fossil fuels to renewable energy, efficient and environmentally friendly use of fossil fuels must also be ensured. Oil shale used in embodiments is a fossil fuel source that can improve the economy, independence, and self-sufficiency of energy. Thermal conversion of the oil shale can be accomplished by combustion, retorting, or gasification, wherein embodiments rely on the gasification.

Embodiments rely on the gasification which is a partial high-temperature oxidation process for converting oil shale into gaseous fuels, also called producer gas or product gas, consisting mainly of CO, H2, CH4, H2O, N2, CO2 and C2+ (higher hydrocarbons). Advantageously, a gas purification unit may be used to turn the producer gas into syngas (consisting of H2 and CO) for the requirements of downstream syngas processing (e.g., for power generation in a gas turbine or the synthesis of desired chemicals such as Fischer-Tropsch synthesis, methanol, and ammonia). The concrete composition of the producer gas depends on the gasification technology (e.g., fixed-bed, entrained-flow, or fluidized bed gasifiers) and the process conditions (e.g., gasification agent and operating parameters such as temperature and pressure), which may be implemented in embodiments. Air or a mixture of air, water vapour, and carbon dioxide may also be used as a gasification agent but results in a producer gas with a lower calorific value. The latter can be significantly improved by adding oxygen to the gasification agent mixture. In this case, according to embodiments, an air separation unit is utilized to provide pure oxygen, which may be an energy-intensive process. To meet this challenge, embodiments relay advantageously on a Chemical Looping Gasification (CLG), which uses the ability of metal oxides, so-called oxygen carriers (e.g., iron ore), to adsorb and release oxygen based on oxidation-reduction reactions.

### BRIEF DESCRIPTION OF THE DRAWINGS

Some embodiments of the present invention will be described in the following by way of examples only, and with respect to the accompanying figures, in which:
- Fig. 1: shows the polygeneration system according to an embodiment of the present invention.
- Fig. 2: shows a schematic view the polygeneration system according to an embodiment described.
- Fig. 3.1-3.5: show a schematic view of the gasifier (fuel reactor) according to one or more embodiments described.
- Fig. 4.1: shows an illustrative gasification system, according to one or more embodiment described.
- Fig. 4.2: shows an alternative gasification system, according to one or more embodiment described.
- Fig. 4.3: shows an alternative gasification system, according to one or more embodiment described.
- Fig. 4.4: shows an alternative gasification system, according to one or more embodiment described.
- Fig. 5: shows a schematic flow chart of a process for the polygeneration system according to embodiments.

### DETAILED DESCRIPTION

Various examples will now be described more fully with reference to the accompanying drawings in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

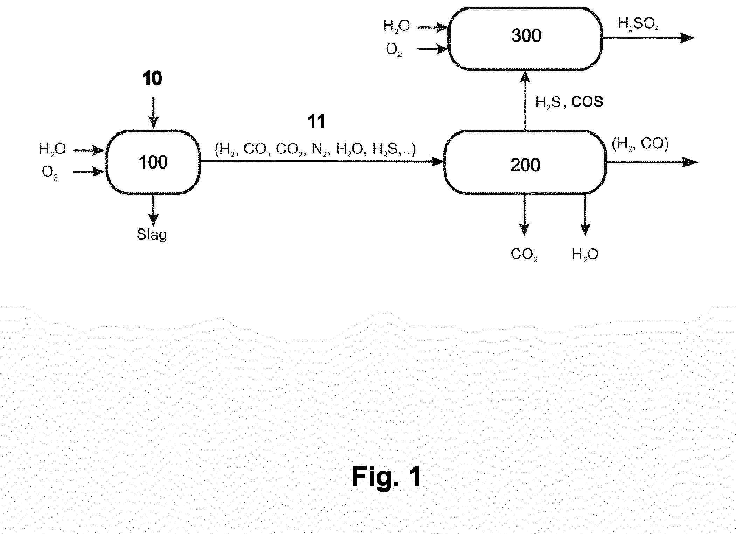

**Fig. 1** shows a polygeneration system according to an embodiment of the present invention. A gasifier (e.g. fuel reactor) can be configured to receive an oil shale 10, oxygen and water vapor, and to generate producer gas 11 from the oil shale 10. The waste matter (e.g. slag) can be separated from the producer gas 11 in the gasifier 100.

The gasifier 100 can be fluidly connected to a gas purification unit 200. The gas purification unit 200 can be configured to receive the producer gas 11 from the gasifier 100 and produce syngas 21 and sulfur containing gases (e.g. hydrogen sulfide 22, carbonyl sulfide). The waste matter (e.g. carbon dioxide, waste water) can be separated from the syngas 21 and sulfur containing gases in the gas purification unit 200.

Oil shale 10 has a high amount of sulfur. For example the sulfur content of the oil shale 10 can be up to 10% or even more. Therefore, oil shale 10 is particularly suited for the polygeneration system to produce the producer gas 11 with high amount of sulfur-containing gases (e.g. hydrogen sulfide, carbonyl sulfide). Therefore, using shale oil 10 in a polygeneration system has an advantage compared to the other carbon-based feedstock.

The gas purification unit 200 can be fluidly connected to a sulfuric acid synthesis unit 300. The sulfuric acid synthesis unit 300 can be configured to receive hydrogen sulfide 22 or other sulfur containing gases from the gas purification unit 200 to produce hydrogen 30 and sulfuric acid 31. The other input of the sulfuric acid synthesis unit 300 can be water and oxygen.

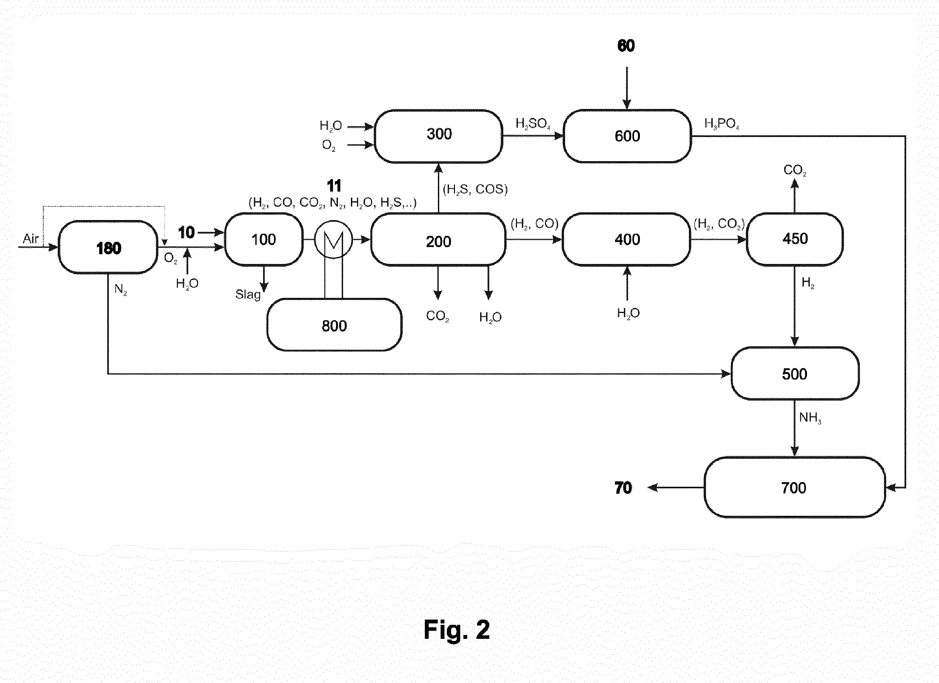

**Fig. 2** shows the principle schematic arrangement of the system. The present system relates to a polygeneration plant for producing raw materials (e.g. hydrogen, ammonia, diammonium phosphate), electricity, and heat from shale material and the polygeneration system comprises the following:
- a gasifier 100;
- a gas purification unit 200;
- a sulfuric acid synthesis unit 300;
- a water-gas shift unit 400;
- a Haber-Bosch unit 500;
- a phosphoric acid synthesis unit 600;
- a diammonium phosphate synthesis unit 700;
- a waste heat recovery unit 800;
- a fluidized bed ash cooler 900.

The gasifier 100 can convert the solid shale material into producer gas 11. The gas purification unit 200 can purify the producer gas 11 from impurities. The sulfuric acid synthesis unit 300 can produce sulfuric acid 31 using hydrogen sulfide 22 separated from the gas purification unit 200. The water-gas shift unit 400 can convert carbon monoxide 23 into hydrogen and carbon dioxide 44 with the addition of water vapor, thus pure hydrogen can be obtained after the carbon dioxide 44 has been separated. The Haber-Bosch unit 500 can synthesize ammonia 50 from the element's hydrogen and nitrogen 15. The phosphoric acid synthesis unit 600 can produce phosphoric acid 61 from phosphate-containing rock 60 and sulfuric acid 31. The diammonium phosphate synthesis unit 700 can convert phosphoric acid 61 to diammonium phosphate 70 using ammonia 50. The waste heat recovery system 800 can be arranged downstream of the gasifier 100 and absorb the waste heat of the producer to supply electricity and thermal energy for use in the oil shale dryer 120 or where it needs in the process. The fluidized bed ash cooler 900 can cool down the shale ash 90 temperature and preheat the gasification agent 12 that can be supplied to the gasifier 100. Additionally, the oil shale dryer 130 can decrease the moisture content of the raw oil shale 10 using low-temperature steam, process water or thermal oil from the waste heat recovery unit 800.

The chemical name and/or chemical formula of the compounds or products that are presented on the figures are the following:
- hydrogen, H2;
- nitrogen, N2;
- oxygen, O2
- carbon monoxide, CO;
- carbon dioxide, CO₂;
- ammonia, NH₃;
- methane, CH₄;
- hydrogen sulfide, H₂S;
- carbonyl sulfide, COS;
- sulfuric acid, H2SO4;
- phosphoric acid, H₃PO₄;
- water or water vapor or waste water, H2O.

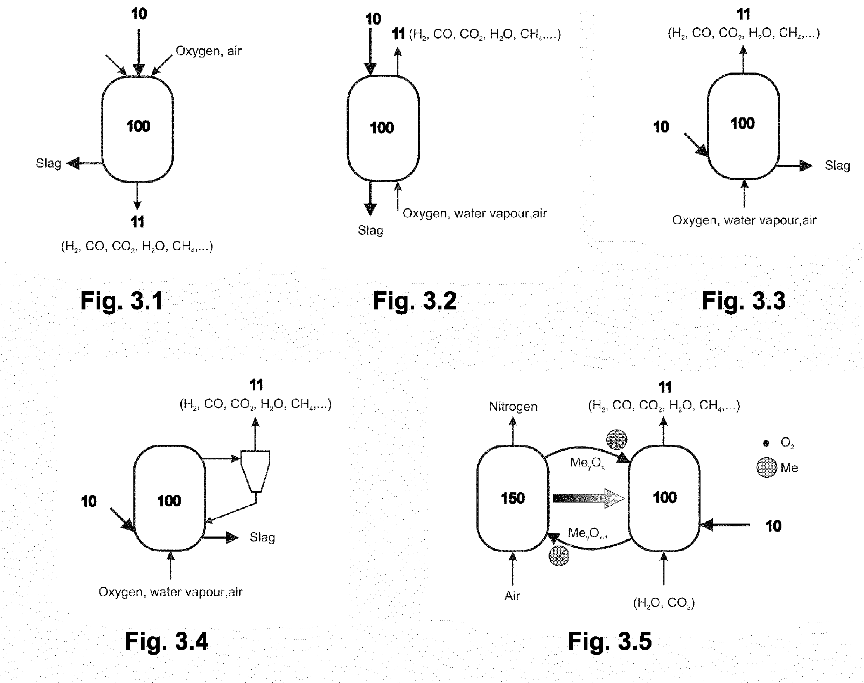

**Fig. 3****.****1 - 3.5** show a schematic view of embodiments for the gasification technologies based on oil shale 10 as carbon-based feedstock. Fig. 3.1 shows an entrained flow gasifier, Fig. 3.2 shows a fixed-bed gasifier, Fig. 3.3 shows a bubbling fluidized bed gasifier, Fig. 3.4 shows a circulating fluidized bed gasifier, and Fig. 3.5 shows a chemical looping gasification.

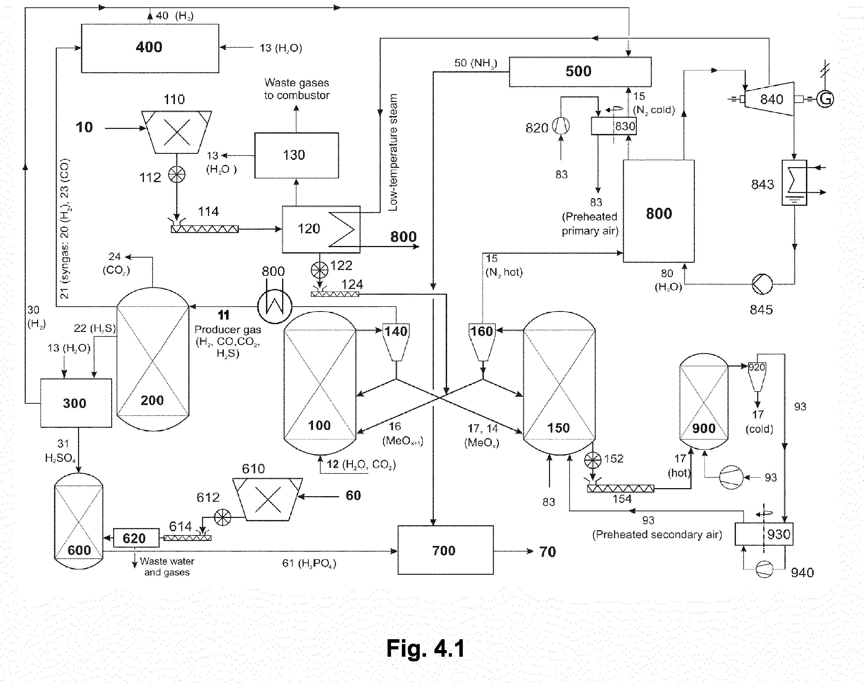

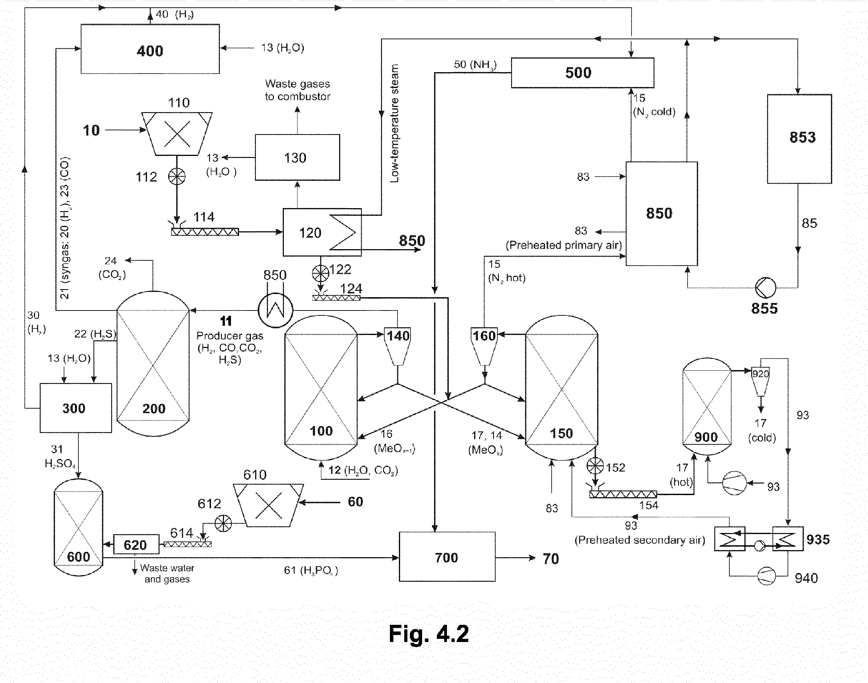

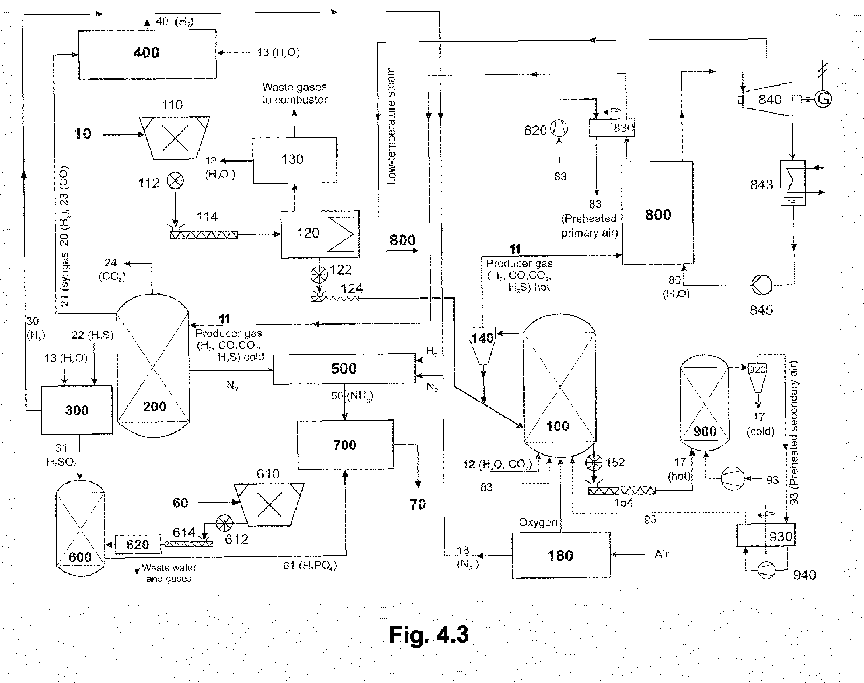

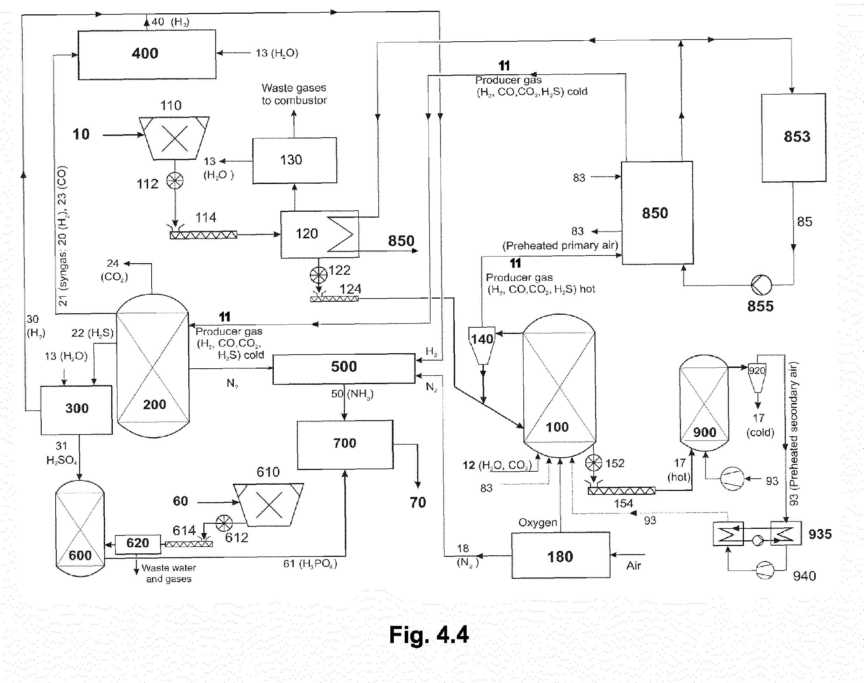

**Fig. 4****.****1** shows a detailed process for the polygeneration system with a gasifier 100, according to an embodiment.

A carbon-based feedstock 10 can fed to a mill 110. The carbon-based feedstock can be crushed and/or ground in the mill 110. The carbon-based feedstock can include for example raw oil shale or solid shale material 10. The mill no can reduce the size of the raw oil shale 10. Then, the raw oil shale can be fed via a rotary feeder 112 and/or screw conveyor 114 to a dryer 120 for drying. The dryer 120 can reduce the moisture content of the raw oil shale 10. Low-temperature steam or process water 80 from the waste heat recovery unit 800 provides the required thermal energy for the drying process.

From an exergy standpoint, it is advantageous to dry the oil shale 10 with a low-temperature heat transfer medium (e.g., low-temperature steam or process water).

The non-condensable waste gases and condensable waste vapors (e.g. water vapor or steam) can flow from the dryer 120 to the condensation system 130. The water vapor 13 can condense in the condensation system 130 and the water vapor 13 can be further used in the system or process. Moreover, the condensation heat can also be recovered for use in the system or process. The non-condensable waste gases can exit the condensation system 130 to be fed to a combustor. The non-condensable waste gases can be used for example in the process to produce heat by combustion.

A rotary feeder 122 and/or a screw conveyor 124 can fed the dried oil shale 10 through a feeding unit into a gasifier 100. In the gasifier 100, the dried oil shale or 10 can be converted into producer gas 11. The producer gas 11 mainly consisting of hydrogen, carbon monoxide, hydrogen sulfide, methane, carbon dioxide and other multi carbon products C2+.

The gasifier 100 can operate according to any of the gasification technologies, including plasma, entrained flow, fixed bed, fluidized bed, etc. The gasifier 100 can also operate using chemical looping gasification, CLG.

An energy-intensive air separation unit can be required to provide oxygen to the gasification technologies of oil shale. However, the chemical looping gasification process can convert various types of carbon-based feedstock (e.g., biomass, oil shale) into high-quality producer gas, mainly consisting of hydrogen, carbon monoxide and carbon dioxide, without the need for an energy-intensive air separation unit.

In chemical looping gasification (e.g. gasifier 100), the fuel (e.g. oil shale 10) is partially oxidized in the gasifier by metal oxide (MeₓO_{y}), resulting in the high-quality product gas (mainly consisting of hydrogen, carbon monoxide and carbon dioxide) and the reduced form of the oxygen carrier (MeₓO_{y-1}).

A gasification agent 12 can be the input of the gasifier 100 and the gasification agent 12 can be for example water vapor or carbon dioxide, which can enhance the reforming and gasification reactions.

There are at least two variant of the gasification agent 12 that can be used for the system. In the first variant, oxygen, carbon dioxide, water vapor or a mixture of these can be used as the gasification agent 10. Thus, the producer gas 11 can can be composed essentially of hydrogen, carbon monoxide, carbon dioxide, hydrogen sulfide, trace gases (e.g. chlorine, fluorine, carbonyl sulfide, benzene, toluene, xylene), and trace metals (e.g. sodium, potassium).

In the second variant, air, carbon dioxide, water vapor or a mixture of these can be used as the gasification agent 12. With the second variant, the producer gas 11 can be composed of hydrogen, carbon monoxide, carbon dioxide, hydrogen sulfide, trace gases and trace metals, as well as a considerable amount of nitrogen due to the using air as a gasification agent instead of oxygen.

The gasification agent 12 can be preheated. The preheated gasification agent 12 with a temperature of approximately 250 °C - 450°C can be compressed and supplied at the bottom of the gasifier 100.

The gasifier 100 can use either the first variant of gasification agent (with oxygen) or the second variant of gasification agent (with air).

A gas-solid mixture of producer gas 11 and shale ash 17 can exit the gasifier 100 at a high temperature and can be fed to a cyclone 140. The temperature of the gas-solid mixture can be at approximately 850 °C - 1000 °C. The hot shale ash 17 can be separated from the gas-solid mixture in cyclone 140. The spent shale ash 17 can be deployed for example as bed material. A part of the shale ash 17 may be circulated back into the bed and the remaining part can flow into a fluidized bed ash cooler 900.

The fluidized bed ash cooler 900 can be operated as a bubbling fluidized bed or as a circulating fluidized bed with atmospheric pressure. Other ash cooler system can also be used (e.g., moving bed fluidized bed cooler).

The hot shale ash 17 can exit from the air reactor 150 or directly from the gasifier 100. A rotary feeder 152 and/or a screw conveyor 154 can transfer the hot shale ash 17 to the fluidized bed ash cooler 900. The fluidized bed ash cooler 900 can cool the temperature of the hot shale ash and simultaneously preheat the gasification agent 12 for the gasifier 100.

The cold shale ash 17 can exit via a cyclone 920 into a wet ash removal unit and then can be fed to ash silos, stored temporarily, and discharged to be used as a filler material in road construction or the cement industry.

Another input of the fluidized bed ash cooler 900 is a secondary air 93 that is introduced by a fan 910. The cold shale ash 17 mixture can be transferred from the fluidized bed ash cooler 900 into a cyclone 920. The cyclone 920 can be a gas-solids separation unit that uses centrifugal force to separate particles in a gas or liquid stream. The output of the cyclone 920 can be the cold shale ash 17 and the preheated secondary air 93.

The preheated secondary air 93 can enter into a heat exchanger (for example rotating-plate air preheater heat exchanger 930 or thermal oil heat exchanger 935) and a fan 940 can circulate the preheated secondary air 93.

The output of the heat exchanger (for example rotating-plate air preheater heat exchanger 930 or thermal oil heat exchanger 935) can be the preheated secondary air 93 that can enter in the air reactor 150 or directly into the gasifier 100.

The hot producer gas 11 or nitrogen that exit the cyclone 140 can be cooled to a lower temperature via a waste heat recovery unit 800 (e.g. gas cooler). The waste heat recovery unit 800 can be located downstream of the gasifier 100 and the producer gas 11 or nitrogen can exit from the waste heat recovery unit 800 via a producer gas 11 or nitrogen outlet.

A feedwater 80 can be pumped by the boiler feedwater pump 845 into the waste heat recovery system 800 and the feedwater 80 can be heated by the producer gas 11 or nitrogen passing through the heat exchangers (930, 935) of the waste heat recovery system 800. The feedwater 80 is finally can be converted into superheated steam that can enter a steam turbine 840. The steam turbine 840 can be a back-pressure steam turbine or an extraction steam turbine.

A low-temperature steam extracted from the steam turbine 840 or process water (e.g. the feedwater 80) extracted from the water/steam circuit of the waste heat recovery system 800 can be used in the dryer 120 to dry the oil shale 10.

In the condenser 843, the steam 80 at the outlet of the steam turbine 840 can condensates using cooling water or cooling air. The condensation heat of the condenser 843 may be recovered to use in the system or in the process.

The waste heat recovery unit 800 can be coupled with the Rankine cycle or organic Rankine cycle to supply electricity and thermal energy for use in the oil shale dryer 120 or other process components. The recovered heat in the waste heat recovery unit 800 can be used in the system or in the process.

The high temperature of the producer gas 11 can be approximately 850 °C, higher or lower, whereas the low temperature can be approximately 150 °C, higher or lower.

Oxygen can be introduced into the gasifier 100 or can be obtained from oxygen carriers. The oxygen carrier 14,16 can be a metal-oxide (e.g., iron ore, NiO, etc.), in general a MexOy/MexOy-1, that can participate in a reversible oxidation-reduction reaction. The oxidized form of the oxygen carrier 16 is MexOy and the reduced form of the oxygen carrier 14 is MexOy-1. The oxygen carrier 14, 16 can adsorb and release oxygen for oxidation-reduction reactions. The reduced form of the oxygen carrier 14 MexOy-1 can be transported to the air reactor 150 for regeneration. In the air reactor 150, the reduced form of the oxygen carrier 14 (MexOy-1) can be oxidized by atmospheric oxygen to metal oxide 16 (MexOy), which can be transported back to the gasifier 100.

The producer gas 11 at lower temperature can be fed to the gas purification unit 200. The gas purification unit 200 can purify the producer gas 11 from impurities and syngas 21 can be obtained. The output streams of the gas purification unit 200 are syngas 21, sulfur containing gases, and carbon dioxide 24.

The syngas 21 can be for example hydrogen 20 and carbon monoxide 23. The impurities can be for example carbon dioxide, hydrogen sulfide, trace gases and trace metals. The carbon dioxide 24 can be stored or reused. The sulfur containing gases can be for example hydrogen sulfide 22, carbonyl sulfide. Hydrogen can be used as an input to the sulfuric acid synthesis unit 300.

In a further step, the syngas 21 can be fed to the water-gas shift unit 400. The water-gas shift unit 400 can convert the carbon monoxide 23 into hydrogen 40 and carbon dioxide 44 by adding water vapor 13. The water vapor 13 can be received from the condensation system 130.

In addition, the water-gas shift unit 400 can separate the generated carbon dioxide 44 from the hydrogen 20, 40. The carbon dioxide 44 can be captured by a carbon dioxide capture and pure hydrogen 20, 40 can be obtained. Hydrogen 20, 40 can exit from the water-gas shift unit 400 and can be the input of a Haber-Bosch unit 500.

The Haber-Bosch process converts hydrogen and nitrogen to ammonia. This process is the synthetic production of ammonia. The Haber-Bosch unit 500 can be fed with hydrogen 20, 30, 40 and with nitrogen 15. The nitrogen 15 is the output of the air reactor 150. In the Haber-Bosch unit 500 the hydrogen reacts with the nitrogen to form ammonia. According to embodiments, there are four sources for hydrogen 20, 30, 40: from the gasifier 100, the gas purification unit 200, the water-gas shift unit 400, the sulfuric acid synthesis unit 300. The Haber-Bosch unit 500 may use the hydrogen only from one of the four sources or from any combination of the four sources. The remaining hydrogen may be used as output for the system for other purposes or may be stored.

Before the hot nitrogen or nitrogen steam 15 exit from the air reactor 150 (e.g. using the chemical looping gasification), it can be introduced into a cyclone 160. The nitrogen stream 15 is at a high temperature. The temperature of the nitrogen stream 15 can be 1000 °C, higher or lower.

The nitrogen stream 15 from the air reactor 150 can be introduced into a waste heat recovery unit 800. The waste heat recovery unit 800 can adsorb the heat of the high temperature nitrogen stream 15 and generate electricity, steam, hot air, hot oil, for example to dry oil shale, or elsewhere in the system or in the process.

The pre-cooled nitrogen 15 can be first transferred to a rotating-plate air preheater 830. A primary air 83 can enter the rotating-plate air preheater 830 and the primary air 83 can be circulated with a fan 820. The first output of the rotating-plate air preheater 830 can be the cold nitrogen 15 that can enter the Haber-Bosch unit 500. The second output of the rotating-plate air preheater 830 can be the hot air 83 that can be an input of the air reactor 150.

A mill 610 can receive phosphate-containing rock 60. The phosphate-containing rock 60 can be crushed and/or ground in the mill 610. The phosphate-containing rock 60 can be fed to a dryer 620 via a rotary feeder 612 and/or screw conveyor 614. In the drier 620, the waste water and waste gases are separated from the phosphate-containing rock 60 and the waste water and waste gases exit from the drier 620. Then, a feeding unit can feed the dried phosphate-containing rock 60 to the phosphoric acid synthesis unit 600.

In the phosphoric acid synthesis unit 600, the phosphate-containing rock 60 can be treated with sulfuric acid 31 to produce phosphoric acid 61. The phosphate-containing rock 60 can be for example calcium hydroxyapatite, fluorapatite, etc. The phosphoric acid synthesis unit 600 can receive sulfuric acid 31 from the sulfuric acid synthesis unit 300. The byproduct of the process in the phosphoric acid synthesis unit 600 can be for example calcium sulphate CaSO4 and hydrogen fluoride HF. The phosphoric acid 61 can exit from the phosphoric acid synthesis unit 600 and can be the input of the diammonium phosphate synthesis unit 700.

Sulfuric acid synthesis unit 300 can produce sulfuric acid using hydrogen sulfide 22 separated from the producer gas 11 in the gas purification unit 200. Sulfuric acid can be generated either the contact process or the wet sulfuric acid process. The first method is to convert the hydrogen sulfide 22 into elemental sulphur using the Claus process and then produce the sulfuric acid 31 from elemental sulphur, oxygen, and water using the contact process. Another method is to produce the sulfuric acid 31 directly from hydrogen sulfide 22 using the wet sulfuric acid process, which can eliminate the need for the Claus process.

The sulfuric acid synthesis unit 300 can receive hydrogen sulfide 22 separated from the gas purification unit 200 and water from the condensation system 130. Furthermore, the sulfuric acid synthesis unit 300 produces hydrogen 30 and sulfuric acid 31. Sulfuric acid 31 can be the input to the phosphoric acid synthesis unit 600. Hydrogen 30 can be the input to the Haber-Bosch unit 500.

In the diammonium phosphate synthesis unit 700, ammonia 50 can be received as the output of the Haber-Bosch unit 500 and phosphoric acid 61 can be received as the output of the phosphoric acid synthesis unit 600 to produce diammonium phosphate 70 (chemical formula: (NH4)2(HPO4), abbreviation: DAP). The diammonium phosphate 70 can exit from the diammonium phosphate synthesis unit 700. The diammonium phosphate 70 can be used as a fertilizer.

**Fig. 4****.****2** shows an alternative system configuration of the polygeneration system. The main difference from the embodiment of the system presented on fig. 4.1 is that the waste heat recovery unit 800 can be replaced by a thermal oil system 850 using a thermal oil 85. Moreover, other process components 853 and a thermal oil pump 855 can be added to the thermal oil system 850.

In this alternative process, a thermal oil is used as a heat transfer medium that absorbs the thermal energy and transfers the heat to other process equipment. Additionally, the rotating-plate air preheater heat exchanger 930 can be replaced by a thermal oil heat exchanger 935. Therefore, the waste heat recovery unit 800 can be based on a thermal oil heat recovery system 850 that is configured to provide thermal energy for use in power and heat generation, or oil shale dryer 120 or elsewhere in the system or in the process.

The use of the thermal oil heat recovery system 850 has several advantages compared to, for example, the steam cycle, such as simplicity, cost-effectiveness and low maintenance cost.

**Fig. 4****.****3** shows an alternative system configuration of the polygeneration system. The main difference from the embodiment of the system presented on fig. 4.1 is that the air reactor 150 can be replaced by an air separation unit 180.

In this embodiment of the polygeneration system, the second variant of the gasification agent can be used, which is air, carbon dioxide, water vapor or a mixture of these. Air can be supplied through the air separation unit 180. The air separation unit 180 can separate the components of air and provide nitrogen 18 and oxygen. The first output of the air separation unit 180 is nitrogen 18 that can be transferred directly to the Haber-Bosch unit 500. The second output of the air separation unit 180 is oxygen that can be transferred directly to gasifier 100.

The milled and dried oil shale 10 can be then fed to the gasifier 100, where the oil shale 10 can be converted into producer gas 11 using air as the gasification agent. The producer gas 11 consists mainly of CO, H2, N2, H2S, CH4, CO2 and C2+. The nitrogen content in the producer gas is associated with the use of air as a gasification agent.

Water vapor, carbon dioxide, and/or oxygen can also be added to the gasifier 100.

The producer gas 11 can leave the gasifier 100 at a high temperature and can enter a cyclone 140. The temperature of the producer gas 11 can be about 850 °C, higher or lower. The hot producer gas 11 can enter the waste heat recovery unit 800 and can be cooled to a lower temperature. The temperature of the cooled producer gas 11 can be about 150 °C, higher or lower.

The cold producer gas 11 can enter the gas purification unit 200, where the contaminants can be removed, and syngas 21 (H2 and CO) can be recovered from the cold producer gas 11. Because air can be the gasification agent, nitrogen 18 can also be recovered in the gas purification unit 200.

In the next step, carbon monoxide 23 can be converted into hydrogen and carbon 24 dioxide by adding steam in the water-gas shift unit 400. Following the separation of the carbon dioxide 24, a mixture of hydrogen and nitrogen can be obtained, which can be used to generate ammonia 50 in the Haber-Bosch unit 500.

Phosphate-containing rock 60 can be ground and, if necessary, dried before entering the phosphoric acid synthesis unit 600. At this phosphoric acid synthesis unit 600, the phosphate-containing rock 60 can be processed with sulfuric acid 31 to produce phosphoric acid 61. The sulfuric acid 31 can be obtained from hydrogen sulfide 22 separated from the gas purification unit 200 according to either the contact process or the wet sulfuric acid process.

Finally, the diammonium phosphate 70 can be produced by combining the sulfuric acid 31 with ammonia 50 in the diammonium phosphate synthesis unit 700.

The fluidized bed ash cooler 900 can be replaced in this system by other gasification technologies such as entrained flow gasifier or high-temperature Winkler (HTW) gasifier.

**Fig. 4.4** shows an alternative system configuration of the polygeneration system. The main difference from the embodiment of the system presented on Fig. 4.1 are the following:
- the waste heat recovery unit 800 can be based on a thermal oil system 850;
- the rotating-plate air preheater heat exchanger 930 can be replaced by a thermal oil heat exchanger 935.

Therefore, a thermal oil can be employed as the heat transfer medium, which absorbs the waste thermal energy and transfers it to other process equipment.

The thermal oil system 850 can be a thermal oil heat recovery system 850 for power and heat generation, oil shale dryer or other process areas. The thermal oil heat recovery system 850 can use for example a thermal oil 85. There are several advantages of using the thermal oil heat recovery system over, for example, the steam cycle, such as simplicity, cost efficiency and low maintenance cost.

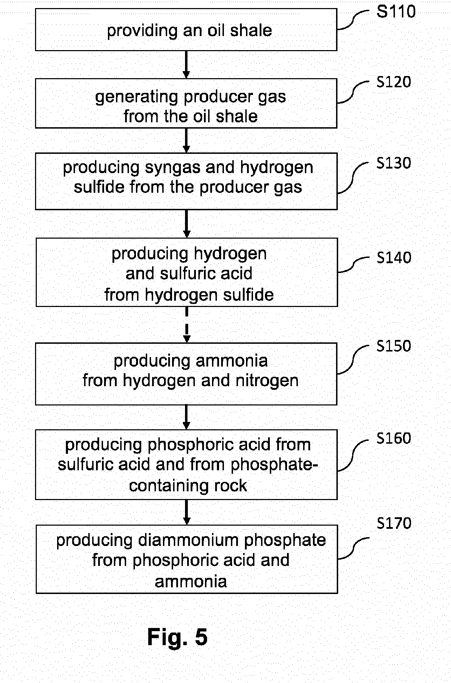

**Fig. 5** shows a schematic flow chart of a process or method for the polygeneration system according to embodiments. Embodiments related to the process can comprises the following steps:
- providing an oil shale (S110),
- generating producer gas from the oil shale (S120),
- producing syngas and hydrogen sulfide from the producer gas (S130),
- producing hydrogen and sulfuric acid from hydrogen sulfide (S140).

Optionally, the process may include one or more of the following steps:
- producing ammonia from hydrogen and nitrogen (S150),
- producing phosphoric acid from sulfuric acid and phosphate-containing rock (S160); and
- producing diammonium phosphate from phosphoric acid and ammonia (S170).

The steps can be proceeded in parallel, for example S110 and S160 or following each other in the presented order or simultaneously.

Embodiments of the present polygeneration system and process can provide the following advantages:
- more suitable energy system that meet the growing energy demands of the future;
- a polygeneration system, that significantly improves overall efficiency, minimizes total losses and emissions, and improves resource utilization;
- the thermal oil heat recovery system has several advantages as simplicity, cost-effectiveness and low maintenance cost;
- not only implies better use of the resources but also indirectly reduces the environmental impact;
- advanced gasification of oil shale in a sustainable energy system;
- generating four or more useful products using the same input or process;
- sustainable energy solution that can use multiple fuels and provide multiple services at the same time;
- polygeneration system can produce electricity, heating, cooling, and raw materials for the chemical industry, which is a promising concept for achieving a circular carbon economy.

In summary, a polygeneration system is disclosed that is able to use oil shale to provide not only producer gas, but also other raw materials (e.g. nitrogen, hydrogen, syngas, hydrogen sulfide, sulfuric acid, ammonia, phosphoric acid, diammonium phosphate), electricity, heat, steam, hot air, hot oil.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein, unless it is stated that a specific combination is not intended.

### List of reference signs

- 10: carbon-based feedstock, oil shale, shale material
- 11: producer gas
- 12: gasification agent
- 13: water, water vapor, steam
- 14: oxygen carrier (e.g. reduced form of a metal oxide, MeₓO_{y-1})
- 15, 18: nitrogen
- 16: oxygen carrier (e.g. oxidized form of a metal oxide, MeₓO_{y})
- 17: shale ash
- 20, 30, 40: hydrogen
- 21: syngas
- 22: hydrogen sulfide
- 23: carbon monoxide
- 24, 44: carbon dioxide
- 31: sulfuric acid
- 50: ammonia
- 60: phosphate-containing rock
- 61: phosphoric acid
- 70: diammonium phosphate
- 80: feedwater, process water, steam
- 83: primary air
- 85: thermal oil
- 90: shale ash
- 93: secondary air
- 100: gasifier (e.g. a fuel reactor)
- 110, 610: mill
- 112, 122, 152, 612: rotary feeder
- 114, 124, 154, 614: screw conveyor
- 120, 620: dryer
- 130: condensation system
- 140, 160, 920: cyclone
- 150: air reactor
- 180: air separation unit
- 200: gas purification unit
- 300: sulfuric acid synthesis unit
- 400: water-gas shift unit
- 500: Haber-Bosch unit
- 600: phosphoric acid synthesis unit
- 700: diammonium phosphate synthesis unit
- 800: waste heat recovery unit
- 820, 910, 940: fan
- 830: rotating-plate air preheater
- 840: steam turbine
- 843: condenser
- 845: boiler feedwater pump
- 850: thermal oil system
- 853: other process components
- 855: thermal oil pump
- 900: fluidized bed ash cooler
- 930: rotating-plate air preheater heat exchanger
- 935: thermal oil heat exchanger

## Claims

1. A system for polygeneration, comprising:
a gasifier (100) configured to receive an oil shale (10) and to generate producer gas (11) from the oil shale (10);
a gas purification unit (200) fluidly connected to the gasifier (100), the gas purification unit (200) is configured to receive the producer gas (11) from the gasifier (100) and produce syngas (21) and hydrogen sulfide (22); and
a sulfuric acid synthesis unit (300) fluidly connected to the gas purification unit (200), the sulfuric acid synthesis unit (300) is configured to receive hydrogen sulfide (22) from the gas purification unit (200) to produce hydrogen (30) and sulfuric acid (31).

2. The system according to claim 1, further comprising:
a Haber-Bosch unit (500) fluidly connected to the sulfuric acid synthesis unit (300), the Haber-Bosch unit (500) is configured to receive hydrogen (20) from the gas purification unit (200) and nitrogen (15, 18) to produce ammonia (50).

3. The system according to claim 1 or claim 2, further comprising:
a phosphoric acid synthesis unit (600) fluidly connected to the sulfuric acid synthesis unit (300), the phosphoric acid synthesis unit (600) is configured to receive sulfuric acid (31) from the sulfuric acid synthesis unit (300) and phosphate-containing rock (60) to produce phosphoric acid (61).

4. The system according to claim 3, referred back to claim 2, further comprising:
a diammonium phosphate synthesis unit (700) fluidly connected to the phosphoric acid synthesis unit (600) and the Haber-Bosch unit (500), the diammonium phosphate synthesis unit (700) is configured to receive phosphoric acid (61) from the phosphoric acid synthesis unit (600) and ammonia (50) from the Haber-Bosch unit (500) to produce diammonium phosphate (70).

5. The system according to any of claims 1 to 4, wherein the syngas (21) includes the carbon monoxide (24) and the system further comprises:
a water-gas shift unit (400) fluidly connected to the gas purification unit (200), the water-gas shift unit (400) is configured to receive the syngas (21) from the gas purification unit (200) and to produce further hydrogen (40) and carbon dioxide (44) from the carbon monoxide (24) in the presence of water (13).

6. The system according to any one of claims 2 to 5, wherein the syngas (21) includes further hydrogen (40) and the Haber-Bosch unit (500) is further fluidly connected to the water-gas shift unit (400) to receive the further hydrogen (40).

7. The system according to any one of claims 2 to 6, further comprising:
an air reactor (150) configured to produce nitrogen (15); or
an air separation unit (180) configured to produce nitrogen (18),
wherein the Haber-Bosch unit (500) is configured to receive the produced nitrogen (15, 18) from the air reactor (150) or from the air separation unit (180).

8. The system according to any one of claims 1 to 7, further comprising:
a waste heat recovery unit (800) fluidly connected to the gasifier (100), the waste heat recovery unit (800) is configured to use heat generated by the gasifier (100) to produce at least one of the following: electricity, steam, hot air, hot oil.

9. The system according to any one of claims 1 to 8, further comprising:
a fluidized bed ash cooler (900) fluidly connected to the gasifier (100) or to the air reactor (150), when referred back to claim 7, wherein the fluidized bed ash cooler (900) is configured to receive shale ash from the air reactor (150) or from the gasifier (100) and to cool down the shale ash (90).

10. The system according to claim 9, wherein the fluidized bed ash cooler (900) includes at least one of the following:
- a bubbling fluidized bed,
- a circulating fluidized bed system,
- a moving bed fluidized bed cooler,
- a fluid bed cooler.

11. The system according to claim 10, wherein the fluidized bed ash cooler (900) is fluidly connected to a heat exchanger (930, 935), and the heat exchanger (930, 935) includes at least one of the following:
- a rotating-plate air preheater heat exchanger (930),
- a thermal oil heat exchanger (935).

12. The system according to any one of claims 1 to 11, further comprising at least one of the following:
- a mill (110) configured to crush or ground a raw oil shale (10);
- a dryer (120) to be fed by the crushed or ground oil shale (10) including a rotary feeder (112) and/or screw conveyor (114);
- another mill (611) for crushing or grounding a raw phosphate-containing rock (60);
- another dryer (620) for the crushed or ground raw phosphate-containing rock (60) and a rotary feeder (612) and/or screw conveyor (614) to feed the crushed or ground raw phosphate-containing rock (60);
- a condensation system (130) fluidly connected to the water-gas shift unit (400), when referred back to claim 5, the condensation system (130) being configured to condense humid air from the dryer (120) and/or from the other dryer (620) to water (13) and to output waste gases;
- a combustion unit configured to generate heat by combustion of the waste gases output by the condensation system (130);
- a feeding unit for feeding the dried oil shale (10) to the gasifier (100);
- another feeding unit to feed the dried phosphate-containing rock (60) to the phosphoric acid synthesis unit (600) as defined in claim 3.

13. The system according to claim 12, wherein the sulfuric acid synthesis unit (300) is fluidly connected to the condensation system (130), and is configured to receive water (13) from a condensation system (130).

14. A method for polygeneration, comprising:
providing (S110) an oil shale (10);
generating (S120) producer gas (11) from the oil shale (10);
producing (S130) syngas (21) and hydrogen sulfide (22) from the producer gas (11); and
producing (S140) hydrogen (30) and sulfuric acid (31) from hydrogen sulfide (22).

15. The method according to claim 14, further comprising:
producing (S150) ammonia (50) from hydrogen (20, 30, 40) and nitrogen (15, 18);
producing (S160) phosphoric acid (61) from sulfuric acid (31) and from phosphate-containing rock (60); and
producing (S170) diammonium phosphate (70) from phosphoric acid (61) and ammonia (50).
